# DEMANDE DE BREVET EUROPEEN

(11) **EP 0 875 832 A1**
(43) Date de publication de la demande: **04.11.1998**
(21) Numéro de dépôt: 98400994.4
(22) Date de dépôt: 23.04.1998
(51) Int. Cl.: G06F 11/20

(54) **Procédé et dispositif de connexion de l'unité centrale d'un système de traitement de données à un sous-système de stockage de données à redondance**

(30) Priorité: 29.04.1997 FR 9705279
(71) Demandeur: BULL S.A., 78430 Louveciennes (FR)
(72) Inventeur: Pinson, Denis, 78770 Goupillières (FR)

(57) **Abrégé**

Le système comprend une unité centrale (CPU) associée à un ou plusieurs contrôleurs d'entrée-sortie (Ctl₁-Ctl₄) et un sous-système de disques à redondance (MD), divisés en unités logiques et sous la commande de deux contrôleurs de disques redondants (SP-A, SP-B). Ceux-ci sont attachés au(x) contrôleur(s) d'entrée-sortie par des bus également redondants. Une première partie des unités logiques est assignée au premier contrôleur de disques (SP-A) et l'autre partie au second contrôleur de disques (SP-B). Lorsqu'une unité logique, assignée au premier contrôleur de disque (SP-A), est accédée, l'état du second contrôleur de disque (SP-B) est surveillé par le chemin de réserve. En cas de détection de défaillance du second contrôleur de disques (SP-B), toutes les unités logiques sont basculées sur le premier (SP-A) et lui sont assignées. Un mode de fonctionnement dégradé est initié et l'accès aux ressources s'effectue par le chemin de réserve.

Applicable aux systèmes de traitement de données.

## Description

La présente invention concerne un procédé de connexion de l'unité centrale d'un système de traitement de données à un sous-système de stockage de données à redondance.

L'invention concerne également un dispositif de mise en oeuvre du procédé.

Elle concerne plus particulièrement un dispositif de connexion de l'unité centrale d'un système de traitement de données à un groupe de disques magnétiques à redondance, via des contrôleurs.

Dans le cadre de l'invention le terme "contrôleur" doit être compris dans son acceptation la plus large : il peut s'agir, par exemple, d'un processeur spécialisé, à programme enregistré. De même, le terme contrôleur sera utilisé indifféremment pour des contrôleurs disposés en entrée-sortie de l'unité centrale ou des contrôleurs de disques proprement dits, ou plus généralement d'unités de stockage de données.

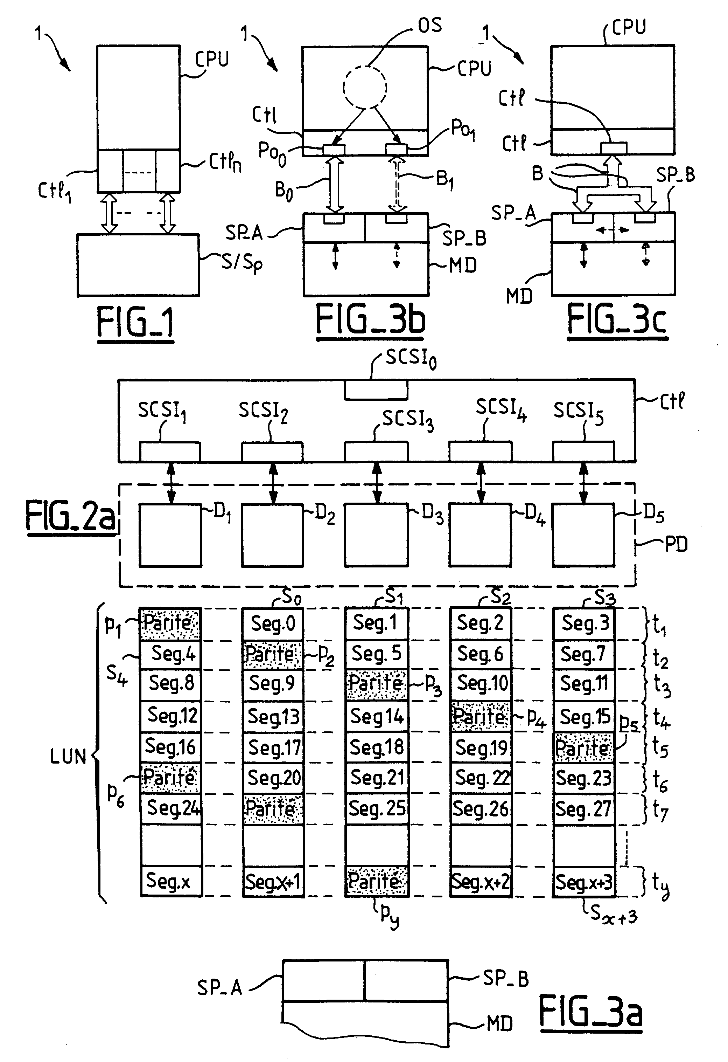

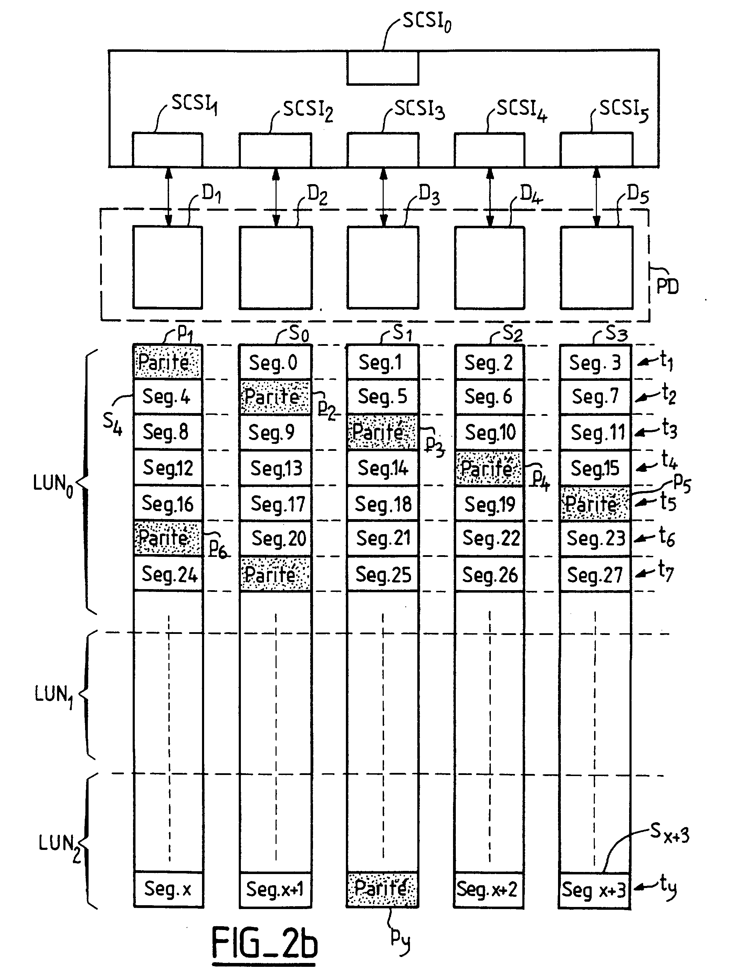

La figure 1, annexée à la présente description, illustre de façon simplifiée l'architecture générale d'un système de traitement de données. Le système de traitement de données 1 comprend une unité centrale, CPU, des contrôleurs, Ctl₁ à CtIₙ, et un ou plusieurs sous-système(s) d'unités périphériques, S/S_{P}. Ce dernier sous-système S/S_{P} peut comprendre, par exemple, des disques simples, des groupes de disques à redondance, des bandes magnétiques, ou encore des imprimantes.

Les groupes de disques à redondance peuvent présenter différentes architectures et notamment des architectures connues sous le vocable anglo-saxon bien connu de "RAID" (pour "Redundancy Array of Independent Disks" ou groupe de disques indépendants à redondance).

Les groupements de disques à architecture "RAID" se subdivisent à leur tour en plusieurs sous-catégories. On peut citer notamment, sans que cela soit exhaustif, les architectures "RAID-1" et "RAID-5".

On va tout d'abord rappeler brièvement les caractéristiques principales de ces deux architecturés qui sont avantageusement mises en oeuvre dans le cadre de l'invention.

Pour obtenir une redondance de type "RAID-1", on met en oeuvre des disques miroirs. Selon cette méthode, les données sont enregistrées normalement sur un premier disque et en redondance sur un second disque, physiquement distinct du premier, qui représente le "miroir" du premier. Lorsqu'un disque "normal" est défaillant, les données peuvent être accédées, en lecture et/ou en écriture, à partir de son disque "miroir". Cela nécessite naturellement de doubler la capacité de stockage par rapport aux besoins réels, et donc le nombre de disques physiques.

La redondance de type "RAID-5" nécessite moins de capacité de mémoire supplémentaire. Les données sont découpées en segments de plusieurs blocs de longueur déterminée, que l'on peut appeler blocs de données "utiles". On associe à un nombre déterminé de segments, un segment redondant composé de blocs de parité.

Selon cette méthode, on utilise aussi plusieurs disques physiques. En général, on découpe les disques en "tranches" et on met en oeuvre un schéma d'enregistrement de données dit à parité tournante.

La figure 2a annexée à la présente description illustre cette méthode particulière d'enregistrement avec redondance de type "RAID-5" et parité tournante. A titre d'exemple, on suppose que le sous-système de stockage de données comprend cinq disques physiques : D₁ à D₅ sous la commande d'un contrôleur unique Ctl, par exemple muni d'interfaces du type connu sous la dénomination "SCSI" pour "Small Computer System Interface", SCSI₁ à SCSI₅. Le contrôleur Ctl comprend également une interface du même type, SCSI₀, reliée à l'unité centrale (non représentée). Sur la figure 2a, en partie basse, on a également représenté la configuration logique de la mémoire de stockage équivalente aux cinq disques, D₁ à D₅. On appelle dispositif physique PD chaque groupement de disques, D₁ à D₅.

Ce groupement est divisé en y tranches, t₁ à t_{*y*}. On suppose que l'on enregistre dans une tranche d'un disque quelconque un seul segment, par exemple le segment S₀ ("Seg. 0") dans la tranche t₁ du disque D₂. Si on associe un segment de parité, p₁, (enregistré dans la tranche t₁ du disque D₁) à quatre segments de données utiles, S₀ à S₄, on constate aisément qu'il y a un décalage de position d'enregistrement du prochain segment de parité, p₂ : celui-ci est enregistré, naturellement dans la tranche t₂ (dans l'exemple décrit), mais sur le disque D₂ et non pas sur le disque D₁. Il existe un décalage régulier également pour les segments P₃ à P₅, enregistrés respectivement sur les disques D₃ à D₅. On retrouve un enregistrement d'un segment parité, p₆, enregistré sur le disque D₁, dans la tranche t₆. Il y a donc un décalage modulo 5 et de façon plus générale, modulo *d, d* étant le nombre de disques physiques et *s* = *d*-1 le nombre de segments de données utiles associés à un segment de parité.

Pour l'exemple illustré par la figure 2a, la carte de répartition, entre les disques, D₁ à D₅, et les tranches, t₁ à t_{*y*}, des segments de données utiles (S₀ = "Seg. S₀" à S_{*x*}+3 = "Seg. S_{*x*}₊₃") et des segments de parités ("parité p₀" à "parité *p*_{*y*}") est donné par la "TABLE 1" placée en fin de la présente description.

Naturellement, d'autres schémas de répartition sont possibles, mais si l'on désire un enregistrement à parité tournante, le rapport entre le nombre cumulé de segments de données utiles et le nombre de segments de parité associé et le nombre de disques physiques ne peut être quelconque.

Tel qu'il vient d'être défini, l'espace de stockage de données constitue de fait un espace de mémoire virtuel ou unité logique LUN.

On peut encore subdiviser cet espace mémoire virtuel en plusieurs unités logiques, LUN₀ à LUN₂, comme illustré plus particulièrement par la figure 2b. Chaque unité logique, LUN₀ à LUN₂, comprend un certain nombre de tranches, le nombre de segments total (données utiles et données de parité) étant égal au nombre de tranches multiplié par le nombre de disques physiques. Dans l'exemple décrit sur la figure 2b, on a supposé que l'ensemble disque virtuel était divisé en trois unités logiques, LUN₀ à LUN₂. En d'autres termes, on a remplacé un découpage "vertical" (par disques physiques) en un découpage "horizontal", pour un dispositif physique PD donné. Le nombre de partitions sera choisi pour obtenir des performances optimisées en fonction de la capacité des disques élémentaires, D₁ à D₅, et donc de leur capacité cumulée (dispositif physique PD). Dans l'exemple décrit, chaque unité logique, LUN₀ à LUN₂, forme un disque virtuel de capacité égale au tiers de la capacité cumulée, c'est-à-dire de la capacité du dispositif physique PD.

Le recours à une architecture de disques à redondance de données ne permet de résoudre qu'une partie des problèmes posés par les défaillances du matériel mis en oeuvre. En effet, bien que non représentés sur les figures précédentes, les disques ou les groupements de disques sont placés sous la commande d'au moins un contrôleur de disques. En cas de défaillance de cette unité, l'accès à tout ou partie de l'information est gravement compromis. Aussi, on a proposé d'introduire également une redondance à ce niveau, comme illustré sur la figure de détail 3a. Selon cette architecture, l'ensemble multidisque, sous la référence commune MD, est placé sous la commande de deux contrôleurs de disques, en l'occurrence deux processeurs de stockage d'information, SP-A et SP-B, fonctionnant en redondance. L'ensemble multidisque MD peut comprendre une ou plusieurs unités physiques PD (figures 2a à 2b), donc, *a fortiori,* une ou plusieurs unités logiques (figure 2b : LUN₀ à LUN₂). Habituellement, on assigne une partie de l'espace disque, et donc des unités logiques (*a priori* la moitié ou une valeur s'en rapprochant, en fonction de l'architecture de redondance adoptée), à l'un des processeurs de stockage de données, par exemple SP-A, et le restant à l'autre processeur, par exemple SP-B.

En mode de fonctionnement normal, les accès à la première partition de l'espace total disque s'effectuent via le processeur SP-A, et les accès à la seconde partition de l'espace disque via le processeur SP-B. Si une unité logique LUN#*m* (avec *m* arbitraire et compris entre 0 et *n, n*+1 étant le nombre maximum d'unités logiques) est assignée à SP-A, il y a lieu d'organiser une redondance d'accès à la ressource LUN#*m* par le processeur SP-B en cas de défaillance du processeur SP-A. Or de nombreux types de processeurs disponibles dans le commerce ne permettent pas de "voir" directement l'unité logique LUN#*m* par le processeur SP-B.

Habituellement, deux méthodes sont mises en oeuvre et vont être explicitées en regard des figures 3b et 3c.

La première méthode est illustrée schématiquement par la figure 3b. Le contrôleur d'entrée-sortie Ctl de l'unité centrale CPU communique par des bus distincts, B₀ et B₁, avec les processeurs SP-A et SP-B, sous la commande du système d'exploitation OS de l'unité centrale CPU. Le système d'exploitation OS peut être quelconque. Il peut s'agir d'un système d'exploitation "UNIX" ou "GCOS" (marques déposées), par exemple. En mode normal, l'accès à l'unité logique LUN#*m*, assignée au processeur SP-A, s'effectue via le bus B₀ (trait plein sur la figure 3b). Lorsque qu'une défaillance (matérielle ou logicielle), interdisant l'accès à cette unité logique LUN#*m* via le bus B₀ et le processeur SP-A, est détectée, on bascule au moins l'unité logique LUN#*m*, voire l'ensemble des unités logiques assignées au processeur SP-A, sur le processeur SP-B. L'accès s'effectue alors via le bus B₁ (en traits pointillés) et le fonctionnement passe en mode dit "dégradé". Pour ce faire, on utilise une commande généralement connue sous le vocable anglo-saxon "trespass" qui signifie "forçage d'assignation". Naturellement, le processus est entièrement similaire pour organiser le basculement des unités logiques assignées au processeur SP-B sur le processeur SP-A.

Cette méthode présente l'inconvénient de remonter aux "couches" les plus élevées de logiciel, c'est-à-dire au niveau du système d'exploitation OS de l'unité centrale CPU. Il s'ensuit une surcharge probable de ce dernier. Il est même nécessaire de modifier le code de certains systèmes d'exploitation pour pouvoir prendre en charge de telles tâches spécifiques.

La seconde méthode est illustrée schématiquement par la figure 3c. On n'utilise qu'un seul bus B reliant le contrôleur Ctl aux processeurs redondants SP-A et SP-B. En cas de détection de défaillance, on utilise une fonction programmée dite "auto-trespass" organisant l'auto-basculement d'un processeur à l'autre.

Cette méthode, bien qu'elle libère le système d'exploitation OS de l'unité centrale CPU, n'est cependant pas exempte d'inconvénients. Le fait de ne disposer que d'un seul bus entraîne une surcharge, même en mode normal. En outre, on ne dispose plus que d'un seul canal physique entre le contrôleur Ctl et les processeurs de stockage SP-A et SP-B.

L'invention vise à pallier les inconvénients des procédés de l'art connu, tout en conservant, voire améliorant, la redondance d'accès aux ressources de stockage de données. Notamment, elle se fixe pour but de réaliser un accès transparent, pour le système central, aux ressources de stockage de données redondantes.

Pour ce faire, on "descend" le contrôle et la détection des pannes dans le contrôleur d'entrée-sortie système, ce qui masque ces tâches au système d'exploitation. L'architecture physique adoptée est similaire à celle décrite en regard de la figure 3b. Notamment, on utilise deux bus distincts, l'un servant de chemin de transmission "normal" pour un premier contrôleur de disque, et l'autre de chemin de transmission redondant (c'est-à-dire de réserve) pour l'autre contrôleur de disques (ce dernier étant utilisé en redondance également), et inversement.

L'invention a donc pour objet un procédé de connexion de l'unité centrale d'un système de traitement de données à un sous-système comprenant des ressources de stockage de données placées sous la commande de deux contrôleurs de stockage de données fonctionnant en redondance, ladite unité centrale étant associée à au moins un contrôleur d'entrée-sortie communiquant avec lesdits contrôleurs de stockage de données par deux chemins de transmission de données distincts, caractérisé en ce qu'il comprend au moins les étapes suivantes :
1) une étape initiale d'assignation de tout ou partie desdites ressources de stockage de données à un premier contrôleur de stockage de données ;
2) une étape d'accession par au moins un contrôleur d'entrée-sortie, via un chemin de transmission de données, dit normal, à l'une au moins desdites ressources de stockage de données assignées audit contrôleur de stockage de données, dit actif,
3) une étape de surveillance, via l'autre chemin de transmission de données, dit de réserve, de l'état de l'autre contrôleur de stockage de données, dit de réserve, et dudit chemin de transmission de données de réserve.

L'invention a encore pour objet un procédé de connexion de l'unité centrale d'un système de traitement de données à un sous-système comprenant des ressources de stockage de données placées sous la commande de deux contrôleurs de stockage de données fonctionnant en redondance, ladite unité centrale étant associée à au moins un contrôleur d'entrée-sortie communiquant avec lesdits contrôleurs de stockage de données par deux chemins de transmission de données distincts, caractérisé en ce qu'il comprend au moins les étapes suivantes :
1) une étape initiale d'assignation de tout ou partie desdites ressources de stockage de données à un premier contrôleur de stockage de données ;
2) une étape consistant en l'exécution de commandes d'entrée-sortie, transmises par un contrôleur d'entrée-sortie via ledit chemin de transmission de données normal, de manière à accéder à l'une desdites ressources de stockage de données assignées audit contrôleur de stockage de données actif,
3) une étape de surveillance de l'état de ce contrôleur et dudit chemin de transmission de données normal, et en ce qu'il comprend, lors de la détection d'un état de défaillance pendant cette dernière étape, les étapes subséquentes suivantes :
   a/ une étape de basculement desdites ressources de stockage assignées au contrôleur de stockage de données actif vers le contrôleur de données de réserve et de leur réassignation à ce dernier ;
   b/ et une étape de ré-exécution desdites commandes d'entrée-sortie par ledit chemin de transmission de données de réserve.

L'invention sera mieux comprise et d'autres caractéristiques et avantages apparaîtront à la lecture de la description qui suit, en référence aux figures annexées, parmi lesquelles :
- la figure 1 illustre schématiquement l'architecture générale d'un système de traitement de données selon l'art connu ;
- les figures 2a et 2b illustrent deux architectures de disques redondants selon l'art connu ;
- les figures 3a à 3b illustrent schématiquement le fonctionnement de contrôleurs de disques redondants selon deux méthodes de l'art connu ;
- la figure 4 illustre schématiquement un premier exemple de réalisation d'un système de traitement de données conforme à l'invention ;
- la figure 5 illustre schématiquement un exemple d'architecture logique d'un contrôleur utilisé dans le système de la figure 4 ;
- et les figures 6 et 7 illustrent des exemples supplémentaires de réalisation de systèmes de traitement de données conformes à l'invention.

Le procédé de connexion entre une unité centrale d'un système de traitement de données et un sous-système de disques à redondance conforme à l'invention, ainsi qu'un exemple de dispositif, vont maintenant être décrits de façon détaillée.

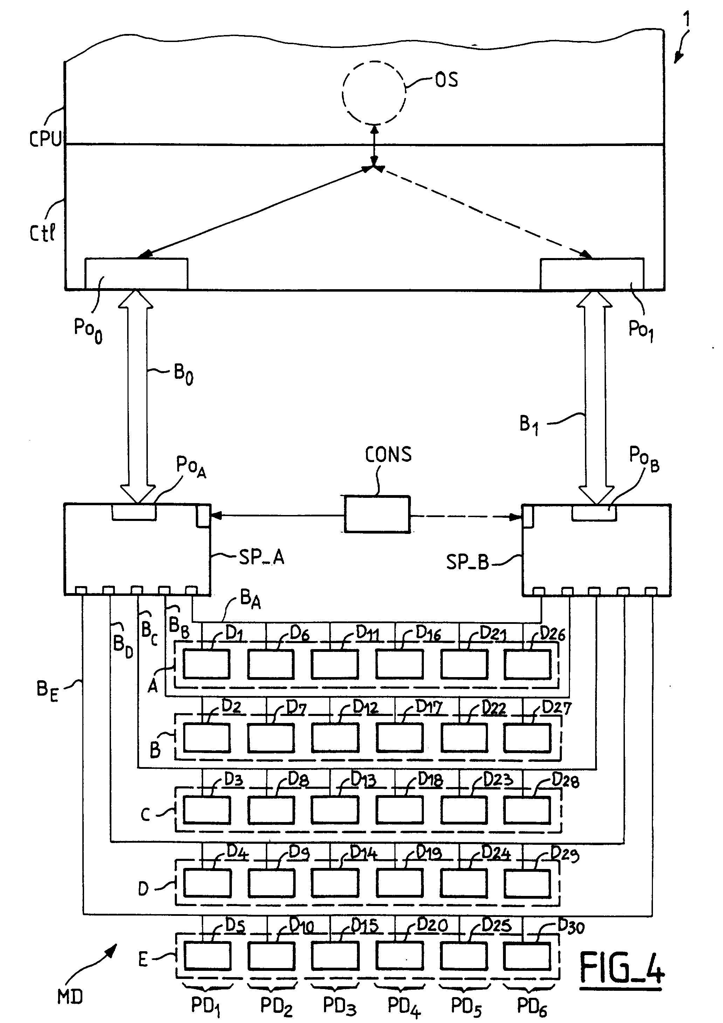

Pour fixer les idées, on suppose que l'ensemble multidisque MD comprend trente disques individuels, D₁ à D₃₀, comme illustré plus particulièrement par la figure 4. Dans l'exemple décrit, ces trente disques sont répartis en cinq sous-ensembles "matériels" (tiroirs ou armoires) de six disques chacun et repérés par les lettres A à E. L'accès à chacun des disques des cinq sous-ensembles, A à E, est réalisé à l'aide de cinq bus, B_{A} à B_{E}, reliés chacun, en une première extrémité, au premier processeur de stockage, SP-A, et, en une seconde extrémité, au second processeur de stockage de données, SP-B, par exemple via des interfaces de type "SCSI". Les disques, D₁ à D₃₀, sont donc arrangés selon une organisation matricielle de cinq "lignes" et six "colonnes", les "lignes" étant formées par les sous-ensembles A à E.

Dans un mode de réalisation préférée de l'invention, la redondance de stockage peut être indifféremment configurée (à un stade initial) suivant une architecture "RAID-1" ou "RAID-5". La configuration initiale choisie est introduite dans les processeurs de stockage, SP-A et SP-B, à l'aide d'une console de commande, CONS, branchée à tour de rôle sur un port série de ces deux processeurs (ou à l'aide de deux consoles de commande dans une variante de réalisation non représentée).

Pour fixer les idées, si la redondance est du type "RAID-5", les cinq disques physiques de chaque "colonne" de la matrice sont associés et forment des dispositifs physiques, PD₁ à PD₆, de façon similaire à ce qui a été décrit en relation avec les figures 2a ou 2b (dispositif PD). Comme il a été indiqué, on peut encore subdiviser chaque dispositif physique en unités logiques, par exemple en trois unités logiques (figure 2b : LUN₀ à LUN₂). *A priori,* la moitié des dispositifs physiques est assignée, en mode normal, au processeur SP-A (par exemple les dispositifs physiques PD₁ à PD₃). L'autre moitié (PD₄ à PD₆) est assignée à l'autre processeur, SP-B.

Le contrôleur d'entrée-sortie, Ctl, de l'unité centrale, CPU, communique via deux ports distincts, Po₀ et Po₁, avec les processeurs de stockage, SP-A et Sp-B, respectivement, via deux bus, B₀ et B₁, et deux ports, Po_{A} et Po_{B}, associés chacun à l'un des processeurs de stockage. Tous ces ports comprennent, par exemple, des interfaces du type "SCSI".

En mode "RAID-5", l'ensemble multidisque MD est "vu" par l'unité centrale, CPU, et le système d'exploitation, OS, comme dix-huit disques logiques identifiés par des numéros d'unités logiques (LUN#*m*), comme il le sera montré ci-après. En effet, cinq disques élémentaires (physiques) sont nécessaires pour constituer un groupe "RAID-5" ou dispositif physique, PD₁ à PD₆, soit six groupes. Ces groupes étant divisés en trois unités logiques, on obtient 6*3 = 18 disques logiques.

En mode "RAID-1", ce même ensemble multidisque MD est "vu" comme quinze disques logiques, soit 2*15 = 30 disques élémentaires (physiques), également identifiés par des numéros d'unités logiques (LUN#*m*).

Pour obtenir une table de configuration d'adresses des disques logiques qui puisse tenir compte des deux modes de redondance, lors de la configuration initiale, on introduit une notion d'entité logique supplémentaire qui va être appelée "dispositif logique", également repéré par un numéro : LD#*m*, avec *m* compris entre 00 et 17. En effet, le nombre maximum de dispositifs logiques (et également d'unités logiques) est égal à dix-huit et est obtenu pour une redondance de type "RAID-5".

Dans l'exemple choisi, pour une redondance de type "RAID-5", les dispositifs logiques LD#00 à LD#08 sont assignés au processeur SP-A et les dispositifs logiques LD#09 à LD#17 sont assignés au processeur SP-B. Pour une redondance de type "RAID-1", les dispositifs logiques LD#00 à LD#07 sont assignés au processeur SP-A et les dispositifs logiques LD#09 à LD#15 sont assignés au processeur SP-B (les dispositifs logiques LD#08 et LD#16 et LD#17 n'étant pas affectés pour ce type de redondance).

Dans un exemple de réalisation pratique, on prévoit deux chemins de transmission, c'est-à-dire deux "canaux physiques". Pour différencier ces deux canaux physiques, on introduit un paramètre d'adresse PC#*x*. L'indice *x* prend deux valeurs distinctes, par exemple *x*=0 et *x*=2.

On subdivise les canaux physiques en canaux logiques LC#*y*, avec *y* compris entre 0 et 9 (valeur maximale obtenue pour le mode "RAID-5").

Pour pouvoir adresser complètement et sans ambiguïté une unité logique LUN#*m*, ou "cible" à accéder (en lecture ou en écriture), quel que soit le mode de redondance configuré initialement ("RAID-1" ou "RAID-5"), il est nécessaire de définir un paramètre d'adressage supplémentaire que l'on appellera numéro d'identification "SCSI" (type d'interface choisi dans l'exemple décrit) ou ID#*z*. Les valeurs que peuvent prendre *z* dépendent du mode de redondance. En mode "RAID-1", un seul numéro d'identification ID#*z* est nécessaire, par exemple *z*=02. En mode "RAID-5", chaque sous-ensemble de dispositifs logiques LD#*m* étant divisé en trois groupes "RAID-5", eux-mêmes subdivisés en trois unités logiques LUN#*m*, on définit trois valeurs de numéros d'identification ID#*z* pour chaque sous-ensemble, par exemple les valeurs hexadécimales 02, 03 et 04 pour le premier sous-ensemble (unités logiques assignées au processeur SP-A en mode normal), et 08, 09 et OA pour le second sous-ensemble (unités logiques assignées au processeur SP-B en mode normal).

La "TABLE 2" placée en fin de la présente description constitue la table complète de l'adressage des "cibles" en fonction de la configuration initiale (redondance de type "RAID-1" ou "RAID-5"). Dans cette table, la colonne "LD#" est commune aux deux configurations initiales.

On constate d'après cette table que, en mode "RAID-5", pour adresser un disque virtuel particulier, c'est-à-dire un des dispositifs logiques LD#00 à LD#17, il est nécessaire d'utiliser une paire combinée ID#z/LUN#*m*, *m* prenant l'une des trois valeurs 00, 01 ou 02, quel que soit le groupe "RAID-5" et le sous-ensemble de dispositifs logiques (LD#00 à LD#08 affectés au processeur SP-A ou LD#09 à LD#17 affectés au processeur SP-B).

En mode "RAID-1", il y a correspondance biunivoque entre les numéros d'unités logiques LUN#*m* et les numéros de dispositifs logiques LD#*m* (exprimés en hexadécimal pour ces derniers), étant entendu, dans ce cas, que LD#08, LD#16 et LD#17 ne sont affectés à aucune unité logique LUN#*m*. Le numéro d'identification ID#*z* étant constant, il est donc seulement nécessaire de connaître le numéro d'une unité logique pour l'adresser.

On constate également, que les différents paramètres d'adresse du dispositif logique LD#00, tels qu'ils ressortent de la "TABLE 2" sont identiques (LUN#00, ID#02) quel que soit le type de redondance. Cette propriété permet, par utilisation classique d'une commande d'interrogation, de déterminer le type de redondance configuré initialement.

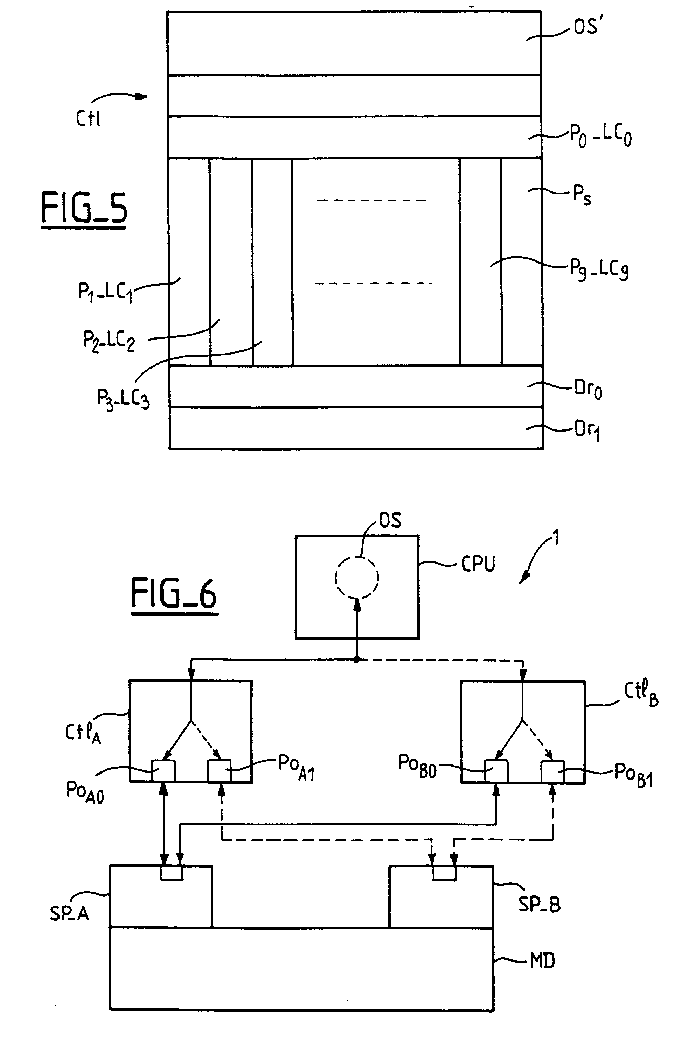

Avant de décrire plus avant le procédé de connexion avec redondance selon l'invention, on va préciser tout d'abord l'architecture logique du contrôleur d'entrée-sortie Ctl par référence à la figure 5.

On a représenté sur cette figure 5 les différentes couches logiques du contrôleur Ctl. La couche supérieure est constituée par un système d'exploitation en temps réel OS', par exemple du type "GPOS" décrit dans le **brevet** français No. 2 679 351 au nom de la Demanderesse. Les deux couches immédiatement inférieures sont constituées de couples "module de programme-canal logique". La première couche est constituée d'un module de gestion général de traitement P₀ (ou "process manager" selon la terminologie anglo-saxonne) et d'un canal logique LC₀, communs aux autres modules de gestion et aux autres canaux. Les canaux LC₁ à LC₉ sont les canaux logiques associés aux différents dispositifs logiques d'un sous-ensemble (LD#00 à LD#08, pour SP-A, ou LD#09 à LD#17, pour SP-B). Ils correspondent aux numéros LC#01 à LC#09 de la "TABLE 2". Les deux couches inférieures sont des modules de gestion, Dr₀ et DR₁, ou "drivers" selon la terminologie anglo-saxonne, gérant les ports Po₀ et Po₁ (figure 4), respectivement. Les modules de traitement P₁ à P₉ gèrent les canaux logiques correspondants, LC₁ à LC₉, et utilisent le port approprié, Po₀ ou Po₁, pour transmettre des commandes "SCSI" (dans l'exemple décrit) au processeur SP-A ou SP-B, selon l'unité logique à accéder.

Considérée dans sa globalité, l'architecture logique décrite jusqu'à ce point est, en soi, commune à l'art connu. Cependant, selon une première caractéristique importante de l'invention, la couche logique des "modules de traitement/canaux logiques" est complétée par un module de programme spécifique P_{S}, que l'on appellera de "surveillance" et dont le fonctionnement va être explicité dans ce qui suit.

En mode normal, lorsqu'on accède à l'une des unités logiques assignées au processeur actif SP-A (par exemple à l'adresse ID#03/LUN#01 en mode "RAIDS"), une commande "SCSI" est transmise par le port Po₀ (figure 4) à ce processeur, sous la commande du module de programme de gestion Dr₀ et emprunte le bus B₀, c'est-à-dire le chemin dit "normal" pour ce processeur. Dans ces conditions, le processeur SP-B est en réserve, ainsi que le bus B₁. Le module de programme PS scrute alors en permanence l'état du processeur SP-B et du chemin y conduisant, en utilisant le bus libre B₁ et le port Po₁, sous la commande du module de programme de gestion Dr₁. Pour fixer les idées, la période de scrutation est typiquement de 2 secondes.

Lorsqu'un état de dysfonctionnement est détecté, quelle qu'en soit la cause (panne ou défaillance du processeur SP-B, mauvais contacts des conducteurs constituant le bus B₁, déconnexion de celui-ci, etc.), le contrôleur transmet une commande "SCSI" du type "trespass" précité au processeur de stockage "survivant", en l'occurrence le processeur SP-A, via le chemin restant disponible, c'est-à-dire le port Po₀ et le bus B₀. Cette commande entraîne le basculement de toutes les unités logiques sur le processeur SP-A et leur assignation à ce processeur. Désormais l'accès à ces unités logiques s'effectue via le processeur SP-A. Il en est de même naturellement pour les unités logiques qui lui étaient précédemment assignées.

On passe alors en mode dit "dégradé". Un "signal d'avertissement" est transmis à l'unité centrale CPU (figure 4), mais les opérations précédemment décrites restent transparentes pour l'unité centrale CPU et, notamment, pour son système d'exploitation OS. Ce dernier continue à transmettre des requêtes pour les unités "basculées" comme il le faisait précédemment en mode dit "normal". Le "signal d'avertissement" est enregistré dans une table d'incidents. Il sert avantageusement à signaler l'existence du "mode dégradé" et l'enregistrement pourra être utilisé ultérieurement à des fins de maintenance (par exemple, changement des organes défectueux).

Le processus qui vient d'être décrit pour le processeur de stockage SP-A se déroule de façon identique pour le processeur SP-B. Si une unité logique assignée à ce processeur est accédée (par exemple à l'adresse ID#08/LUN#02 en mode "RAID-5"), le module de programme PS scrute alors en permanence l'état du processeur SP-A et du chemin y conduisant, en utilisant le bus libre B₀ et le port Po₀, sous la commande du module de programme de gestion Dr₀. En cas de dysfonctionnement constaté du chemin de réserve, toutes les unités logiques assignées au processeur SP-A sont basculées sur le processeur SP-B et on passe en mode dégradé comme précédemment. De même un signal d'avertissement est élaboré par le contrôleur Ctl et "remonté" vers l'unité centrale CPU.

Dans une variante supplémentaire de réalisation, tous les dispositifs logiques LD#00 à LD#17, et donc également toutes les unités logiques LUN#*m*, sont initialement assignés au même processeur de stockage de données, par exemple le processeur SP-A. En cas de détection d'un dysfonctionnement sur le chemin de réserve, un signal d'avertissement est élaboré, comme précédemment, par le contrôleur Ctl et "remonté" vers l'unité centrale CPU, signalant l'existence d'un "mode dégradé". Cependant, aucune ressource de stockage de données n'étant assignée au processeur SP-B, il ne peut y avoir de basculement de celles-ci vers le processeur SP-A.

Selon une autre caractéristique importante de l'invention, lorsqu'un dysfonctionnement est détecté en cours d'exécution d'une instruction d'entrée-sortie ("I/O" selon la terminologie anglo-saxonne), un signal du type "trespass" précité est transmis par le chemin de réserve de manière à basculer également les unités logiques du processeur de stockage actif vers le processeur de stockage de réserve et à les lui assigner. Une condition dite "marginale" est générée pour chacune des instructions d'entrée-sortie en cours d'exécution et un nouvel essai est effectué en empruntant le chemin de réserve. Pour ce faire, les instructions d'entrée-sortie sont stockées dans le contrôleur Ctl jusqu'à exécution complète.

Selon un aspect supplémentaire de l'invention, lorsqu'il n'y a pas d'exécution d'instructions d'entrée-sortie ("I/O"), une surveillance continue de l'état du chemin "normal" et du processeur associé (par exemple SP-A) est réalisée sous la commande des couples des modules de traitement, P₁ à P₉, et de canaux logiques, LC₁ à LC₉. Cette surveillance s'effectue par l'envoi en boucle d'instructions d'entrée-sortie spécialisées pour cette tâche.

Comme précédemment, et dans les deux cas qui viennent d'être décrits (exécution d'instructions d'entrée-sortie non réussies, cycle de surveillance en boucle), le mode dégradé est initié et un signal d'avertissement est "remonté" vers l'unité centrale CPU.

Conformément au procédé de l'invention, une double surveillance est donc effectuée : une première surveillance, via le chemin en cours ou actif, pour les commandes d'entrée-sortie en cours d'exécution, une seconde surveillance, via le chemin de réserve, pour scruter l'état du processeur de stockage de réserve, et par ce biais des unités logiques qui lui sont assignées. De cette manière, les performances des canaux logiques ne sont pratiquement pas affectées par cette seconde surveillance (attente des réponses ou "time-out" qui s'effectuent par le chemin de réserve).

Le procédé selon l'invention peut aussi accommoder des pannes ou défaillances dues aux modules de gestion Dr₀ du port Po₀ et Dr₁ du port Po₁. Un dysfonctionnement détecté à ce niveau occasionne également, sous la conduite d'un des modules de traitement, P₁ à P₉, associé aux canaux logiques, LC₁ à LC₉, du contrôleur Ctl, un basculement sur le port "survivant" (par exemple Po₁, si c'est le port Po₀ et/ou le "driver" Dr₀ qui sont défaillants) et la génération d'une commande du type "trespass" précité vers le processeur de stockage attaché à ce port (par exemple SP-B). Il s'ensuit un basculement de toutes les unités logiques précédemment assignées à l'autre processeur (par exemple SP-A) et leur assignement au processeur de réserve (par exemple SP-B). De même, si le module de programme ("process manager") spécifique PS est défaillant, un signal du type "trespass" est transmis sur le chemin actif de manière à basculer les unités logiques assignées au processeur de stockage de réserve dont l'état n'a pu être scruté (par exemple SP-B) vers le processeur de stockage actif (par exemple SP-A).

Dans ces deux cas, le mode dégradé est initié et un signal d'avertissement est "remonté" vers l'unité centrale CPU.

De façon préférentielle, après passage en mode de fonctionnement dégradé, notamment pour éviter les effets dits de "ping-pong", on n'opère pas une reconfiguration automatique, même si les organes défaillants redeviennent opérationnels. Tous les accès aux ressources de stockage de données continuent à s'effectuer au travers du processeur de stockage qui restait opérationnel lors de la survenue de l'incident détecté et du chemin associé, ce jusqu'à ce que l'une des actions suivantes soit entreprise :
- action d'un opérateur qui provoque la reconfiguration du sous-système de stockage de données à l'aide de commandes spécifiques du contrôleur Ctl ;
- ou réinitialisation complète au moins du sous-système de stockage de données, après mise hors tension.

Lors de l'initialisation du système, il est nécessaire de déterminer sous quel mode il devra fonctionner: en mode normal ou en mode dégradé. En d'autres termes, il est nécessaire de déterminer si les deux processeurs de stockages et les chemins associés sont opérationnels. Dans ce cas, il est possible de configurer le sous-système de stockage de données en mode de fonctionnement normal et d'assigner les unités logiques selon le "TABLEAU 2". Dans le cas contraire, toutes les unités logiques sont assignées au seul processeur de stockage "survivant", le mode de fonctionnement dégradé est adopté et un signal d'avertissement est enregistré dans la table d'incidents précitée. Des tests initiaux sont aussi effectués pour détecter le bon fonctionnement des modules de gestion Dr₀ et Dr₁, et du module de programme de surveillance P_{S}. Le résultat de ces tests détermine également le mode de fonctionnement à adopter et la configuration initiale : mode normal ou mode dégradé.

On constate que le procédé selon l'invention permet, non seulement d'obtenir une transparence totale vis-à-vis du système d'exploitation de l'unité centrale CPU même en mode dégradé (effet de "masquage"), mais ménage un chemin de réserve.

Le système qui vient d'être décrit conserve cependant un "maillon" faible dans la chaîne de transmission de commandes et/ou de données. En effet, si le contrôleur Ctl tombe en panne, malgré la redondance élevée présentée par le sous-système de stockage de données, que ce soit en ce qui concerne l'ensemble multidisque MD (figure 4), par l'adoption d'une configuration "RAID-1" ou "RAID-5" (ou de tout autre mode de redondance), ou de l'ensemble de processeurs de stockage, SP-A et SP-B fonctionnant en redondance (et des dispositions adoptées, propres au procédé de l'invention), il n'existe plus de chemin disponible entre l'unité centrale CPU (et son système d'exploitation OS) et les ressources de stockage de l'ensemble multidisque MD.

Pour pallier ce défaut, on prévoit avantageusement une redondance supplémentaire au niveau du contrôleur d'entrée-sortie en le doublant par un second contrôleur. La figure 6 illustre schématiquement une telle architecture.

Le système comprend désormais deux contrôleurs d'entrée-sortie, Ctl_{A} et Ctl_{B}, respectivement. Chaque contrôleur, Ctl_{A} ou Ctl_{B}, "voit" les unités logiques LUN#*m* de façon identique, c'est-à-dire assignées de la même façon à l'un ou à l'autre des deux processeurs, SP-A ou SP-B. En mode de fonctionnement normal, les unités logiques assignées au processeur SP-A sont accédées par le port Po_{A0} du contrôleur Ctl_{A}. En cas de panne du contrôleur Ctl_{A}, ces unités logiques sont accédées par le port correspondant, Po_{B0}, du contrôleur Ctl_{B}. Le système d'exploitation OS de l'unité centrale CPU perd un chemin de transmission de données/commandes, mais peut continuer à accéder aux ressources de stockage via le contrôleur "survivant". Pour sa part, le processeur SP-B est attaché aux contrôleurs Ctl_{A} et Ctl_{B} par les ports Po_{A1} et Po_{B1}, respectivement.

Le mécanisme de basculement des unités logiques LUN#*m* et leur réassignement sur l'un ou l'autre des processeurs de stockage, SP-A ou SP-B, se déroule de façon identique à ce qui a déjà été décrit.

Les calculs montrent que la probabilité d'une panne simultanée des deux niveaux de contrôleurs (contrôleurs d'entrée-sortie, CtlA et CtlB, et processeurs de stockage, SP-A et SP-B) est extrêmement faible.

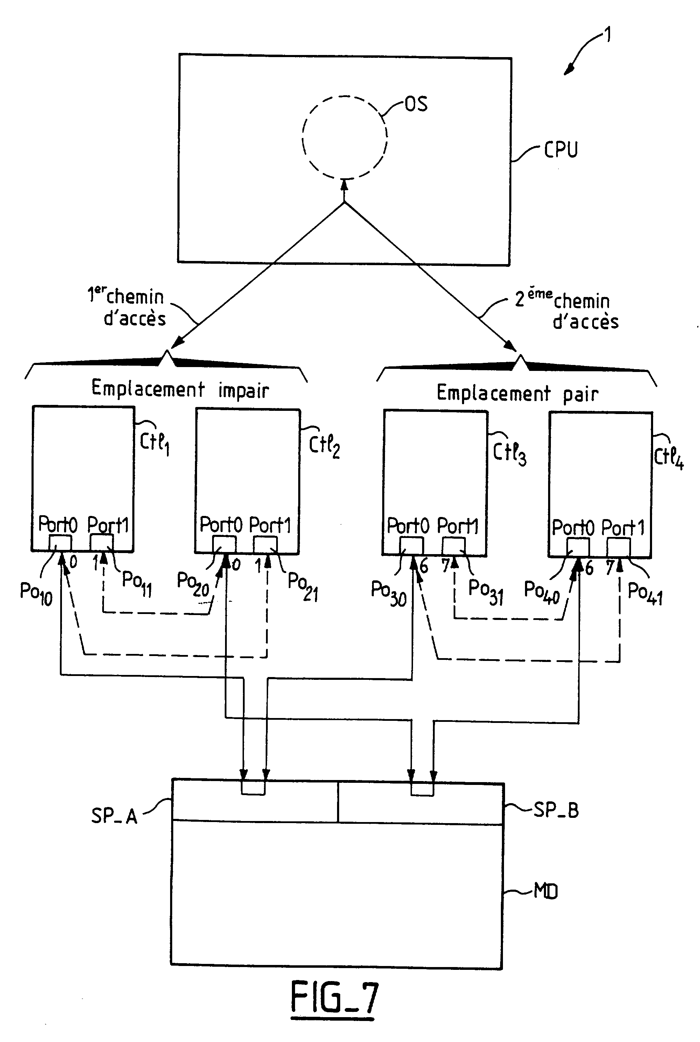

Bien que l'architecture qui vient d'être décrite réponde parfaitement aux besoins de l'invention, il est encore possible de l'améliorer, notamment pour assurer un parallélisme de fonctionnement plus élevé en doublant le nombre de contrôleurs d'entrée-sortie, c'est-à-dire en prévoyant deux ensembles redondants, soit quatre contrôleurs, Ctl₁ à Ctl₄ comme illustré schématiquement par la figure 7.

De façon pratique, on suppose que les contrôleurs sont réalisés, chacun, sur une carte de circuits imprimés et que ces cartes sont enfichées dans des emplacements de connecteurs. On suppose, en outre, pour les différentier lors de l'adressage par le système d'exploitation OS de l'unité centrale CPU, que les cartes des contrôleurs Ctl₁ et Ctl₂ sont enfichées dans des emplacements impairs (fentes ou "slots" selon la terminologie anglo-saxonne) et que les cartes des contrôleurs Ctl₃ et Ctl₄ sont enfichées dans des emplacements pairs. Les contrôleurs Ctl₁ et Ctl₂ constituent, pour le système d'exploitation OS de l'unité centrale CPU, le premier chemin d'accès pour les groupes de dispositifs logiques assignés aux processeurs SP-A et SP-B, respectivement. Les contrôleurs Ctl₃ et Ctl₄ constituent le second chemin d'accès pour les groupes de dispositifs logiques assignés aux processeurs SP-A et SP-B, respectivement.

Les ports "0", Po₁₀ et "1", Po₂₁, des premier et deuxième contrôleurs, Ctl₁ et Ctl₂, sont reliés entre eux par un bus. Les ports "1", Po₁₁, et "0", Po₂₀, des premier et deuxième contrôleurs, Ctl₁ et Ctl₂, sont reliés entre eux par un bus. De même, les ports "0", Po₃₀, et "1", Po₄₁, des troisième et quatrième contrôleurs, Ctl₃ et Ctl₄, sont reliés entre eux par un bus. Les ports "1", Po₃₁, et "0", Po₄₀, des troisième et quatrième contrôleurs, Ctl₃ et Ctl₄, sont reliés entre eux par un bus. Tous ces bus sont représentés en traits pointillés sur la figure 7 et forment des chemins de réserve pour l'accès à un dispositif logique donné.

Les ports "0", Po₁₀ et Po₃₀, des contrôleurs Ctl₁ et Ctl₃ sont attachés par une première paire de bus au premier processeur de stockage SP-A, et les ports "0", Po₂₀ et Po₄₀, des contrôleurs Ctl₂ et Ctl₄ sont attachés par une seconde paire de bus au second processeur de stockage SP-B. Ces bus sont représentés en traits pleins et constituent des chemins "normaux" pour l'accès à un dispositif logique donné.

Pour des architectures telles qu'illustrées par la figure 6 et, de façon plus marquée, par la figure 7, il est nécessaire de définir une configuration d'adressage pour affecter les différents ports "SCSI" des contrôleurs, Ctl₁ à Ctl₄, en sus de la configuration d'adressage de cibles définie par la "TABLE 2".

On appelle *G1* le groupe de dispositifs logiques assignés au processeur SP-A et *G2* le groupe de dispositifs logiques assignés au processeur SP-B. On appelle LD#*G1* et LD#*G2* les numéros de dispositifs logiques correspondant à ces groupes. On appelle enfin ID le numéro "SCSI" "initiateur" des contrôleurs Ctl₁ à Ctl₄. Le numéro ID pour chaque contrôleur est différent et doit suivre une règle appropriée, par exemple celle indiquée ci-après. On obtient alors la table suivante de configuration d'adressage de ces contrôleurs :

| Accès | Groupe | Fente | Ports/ID |
|---|---|---|---|
| 1^{er} | LD#*G1* | impaire | Port 0, ID=0; Port 1, ID=1 |
| 1^{er} | LD#*G2* | impaire | Port 0, ID=0; Port 1, ID=1 |
| 2^{eme} | LD#*G1* | paire | Port 0, ID=6; Port 1, ID=7 |
| 2^{eme} | LD#*G2* | paire | Port 0, ID=6; Port 1, ID=7 |

II manque cependant une information permettant de configurer l'accès à un groupe de dispositifs logiques contrôlés. On utilise pour ce faire un numéro de canal physique PC. Le groupe *G1* est déclaré sur un numéro PC modulo 4, et le groupe *G2* sur un numéro PC (modulo 4)+2.

La table ci-dessus, en association avec la "TABLE 2", permet un adressage sans ambiguïté de n'importe quelle ressource et à travers n'importe quel chemin d'accès, c'est-à-dire de n'importe quelle unité logique accessible individuellement par le système d'exploitation OS de l'unité centrale CPU, ce quel que soit le type de redondance ("RAID-1" ou "RAID-5") configuré pour l'ensemble multidisque MD.

A la lecture de ce qui précède, on constate aisément que l'invention atteint bien les buts qu'elle s'est fixés. Elle permet notamment une transparence complète vis-à-vis du système d'exploitation de l'unité centrale, tout en offrant une grande redondance et en limitant les effets de surcharge en mode de fonctionnement dégradé.

Il doit être clair cependant que l'invention n'est pas limitée aux seuls exemples de réalisations explicitement décrits, notamment en relation avec les figures 4 à 7. En particulier, le nombre total de disques physiques élémentaires de l'ensemble multidisque et leur capacité dépend de l'application envisagée. De même, comme il a été indiqué le type de redondance adopté n'est pas limité aux deux seuls expressément décrits ("RAID1" et "RAID-5"). Enfin, bien que l'on ait considéré implicitement que l'unité centrale était du type monoprocesseur, une architecture multiprocesseur est parfaitement concevable et reste dans le cadre de l'invention.

**TABLE 1**

| Disque D₁ | Disque D₂ | Disque D₃ | Disque D₄ | Disque D₅ |
|---|---|---|---|---|
| parité p₁ | Seg. S₀ | Seg. S₁ | Seg. S₃ | Seg. S₄ |
| Seg. S₅ | parité p₂ | Seg. S₅ | Seg. S₆ | Seg. S₇ |
| Seg. S₈ | Seg. S₉ | parité p₃ | Seg. S₁₀ | Seg. S₁₁ |
| Seg. S₁₂ | Seg. S₁₃ | Seg. S₁₄ | parité p₄ | Seg. S₁₅ |
| Seg. S₁₆ | Seg. S₁₇ | Seg. S₁₈ | Seg. S₁₉ | parité p₅ |
| seg. S₂₀ | Seg. S₂₁ | Seg. S₂₂ | Seg. S₂₃ | Seg. S₂₄ |
| Parité P₆ | Seg. S₂₅ | Seg. S₂₆ | Seg. S₂₇ | Seg. S₂₈ |
| ··· | ··· | ··· | ··· | ··· |
| Seg. S_{*x*} | Seg. S_{*x*}₊₁ | parité p_{*y*} | Seg. S_{*x*}₊₂ | Seg. S_{*x*}₊₃ |

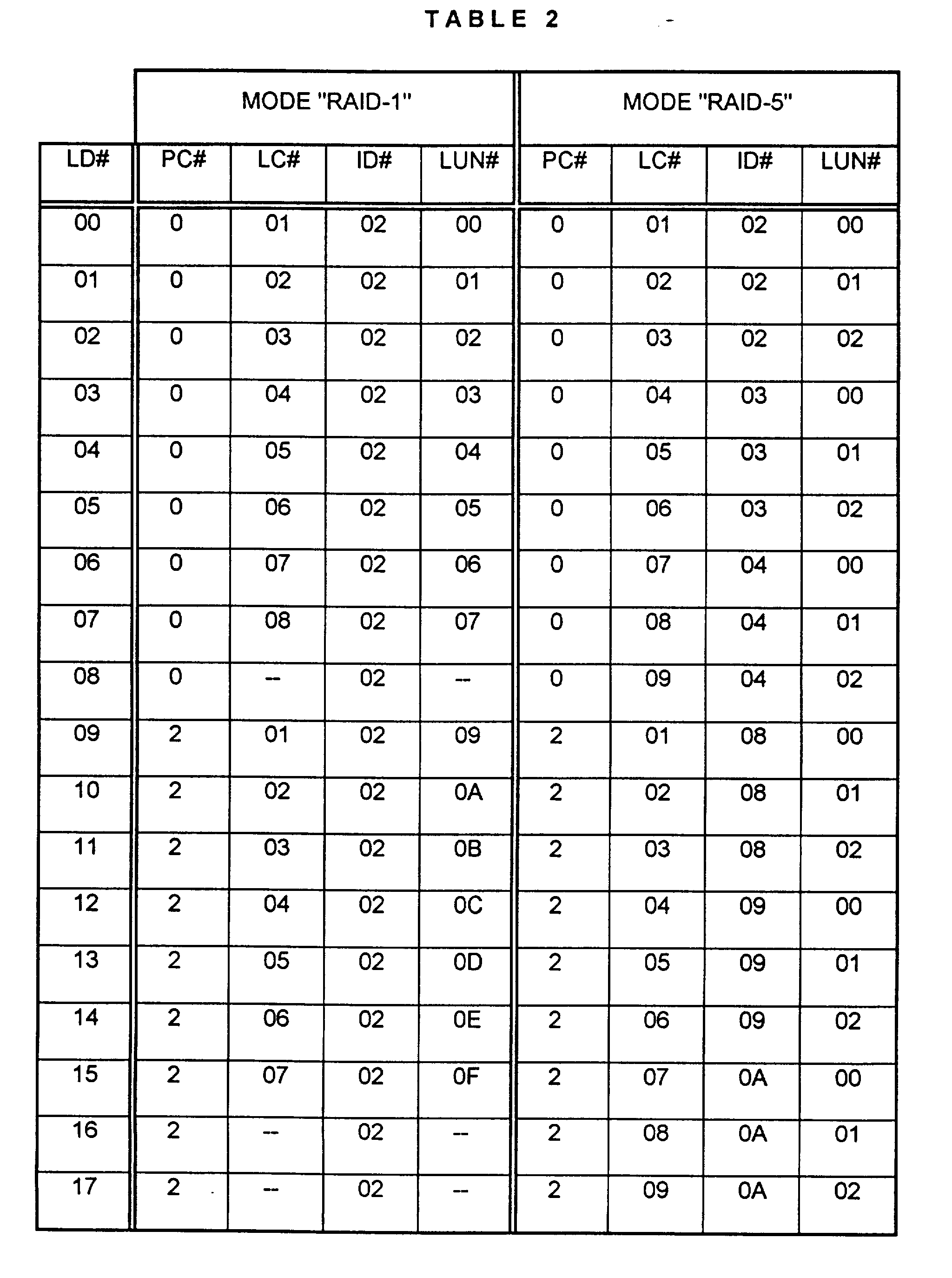

## Revendications

1. Procédé de connexion de l'unité centrale (CPU) d'un système de traitement de données à un sous-système comprenant des ressources de stockage de données (MD) placées sous la commande de deux contrôleurs de stockage de données (SP-A, SP-B) fonctionnant en redondance, ladite unité centrale (CPU) étant associée à au moins un contrôleur d'entrée-sortie (Ctl) communiquant avec lesdits contrôleurs de stockage de données (SP-A, SP-B) par deux chemins de transmission de données distincts (B₀, B₁), caractérisé en ce qu'il comprend au moins les étapes suivantes :
1) une étape initiale d'assignation de tout ou partie desdites ressources de stockage de données (PD₁-PD₆) à un premier contrôleur de stockage de données (SP-A);
2) une étape d'accession par au moins un contrôleur d'entrée-sortie (Ctl), via un chemin de transmission de données (B₀), dit normal, à l'une au moins desdites ressources de stockage de données assignées audit contrôleur de stockage de données (SP-A), dit actif,
3) une étape de surveillance, via l'autre chemin de transmission de données (B₁), dit de réserve, de l'état de l'autre contrôleur de stockage de données (SP-B), dit de réserve, et dudit chemin de transmission de données de réserve (B₁).

2. Procédé selon la revendication 1, caractérisé en ce que ladite étape initiale consiste en l'assignation d'une première partition (PD₁-PD₃) desdites ressources de stockage de données à un premier contrôleur de stockage de données (SP-A) et d'une seconde partition (PD₄-PD₆) à un second contrôleur de stockage de données (SP-B) et, en cas de détection d'un état de défaillance pendant ladite étape de surveillance, ledit procédé comprend une étape supplémentaire de basculement desdites ressources de stockage de données assignées audit contrôleur de stockage de données de réserve (SP-B) vers ledit contrôleur de stockage de données actif (SP-A), et de leur réassignation à ce dernier.

3. Procédé selon la revendication 2, caractérisé en ce que, chaque contrôleur d'entrée-sortie (Ctl) associé à ladite unité centrale (CPU) stockant un module de programme de surveillance (P_{S}) de l'état dudit contrôleur de stockage de données de réserve (SP-B), via ledit chemin de transmission de données de réserve (B₁), le procédé comprend, en cas d'état de défaillance de ce module de programme de surveillance (P_{S}) ou du chemin de réserve (B₁), une étape supplémentaire de basculement desdites ressources de stockage de données assignées audit contrôleur de stockage de données de réserve (SP-B) vers ledit contrôleur de stockage de données actif (SP-A), et de leur réassignation à ce dernier.

4. Procédé de connexion de l'unité centrale (CPU) d'un système de traitement de données à un sous-système comprenant des ressources de stockage de données (MD) placées sous la commande de deux contrôleurs de stockage de données (SP-A, SP-B) fonctionnant en redondance, ladite unité centrale (CPU) étant associée à au moins un contrôleur d'entrée-sortie (Ctl) communiquant avec lesdits contrôleurs de stockage de données (SP-A, SP-B) par deux chemins de transmission de données distincts (B₀, B₁), caractérisé en ce qu'il comprend au moins les étapes suivantes :
1) une étape initiale d'assignation de tout ou partie desdites ressources de stockage de données (PD₁-PD₆) à un premier contrôleur de stockage de données (SP-A);
2) une étape consistant en l'exécution de commandes d'entrée-sortie, transmises par un contrôleur d'entrée-sortie (Ctl) via ledit chemin de transmission de données normal (B₀), de manière à accéder à l'une desdites ressources de stockage de données assignées audit contrôleur de stockage de données actif (SP-A),
3) une étape de surveillance de l'état de ce contrôleur (SP-A) et dudit chemin de transmission de données normal (B₀),
et en ce qu'il comprend, lors de la détection d'un état de défaillance pendant cette dernière étape, les étapes subséquentes suivantes :
a/ une étape de basculement desdites ressources de stockage assignées au contrôleur de stockage de données actif (SP-A) vers le contrôleur de données de réserve (SP-B) et de leur réassignation à ce dernier ;
b/ et une étape de ré-exécution desdites commandes d'entrée-sortie par ledit chemin de transmission de données de réserve (B₁).

5. Procédé selon la revendication 4, caractérisé en ce qu'il comprend une étape supplémentaire, lorsqu'aucune commande d'entrée-sortie n'est exécutée, consistant en surveillance continue de l'état dudit contrôleur actif (SP-A) et dudit chemin de transmission de données normal (B₀).

6. Procédé selon l'une quelconque des revendications 1 à 5, caractérisé en ce que, chaque contrôleur d'entrée-sortie (Ctl) associé à ladite unité centrale (CPU) étant muni de deux ports d'entrée-sortie (Po₀, Po₁), associés par des bus de transmission de données (B₀, B₁) auxdits contrôleurs de stockage de données (SP-A, SP-B), et stockant des modules de programme de gestion (D₀, D₁) de ces ports d'entrée-sortie (Po₀, Po₁), le procédé comprend, en cas d'état de défaillance de l'un de ces modules de programme de gestion de port (D₀ ou D1), une étape supplémentaire de basculement desdites ressources de stockage de données assignées audit contrôleur de stockage de données (SP-A ou SP-B) associé au module de programme de gestion de port défaillant (D₀ ou D₁) vers ledit contrôleur de stockage de données (SP-A ou SP-B) associé à l'autre port d'entrée-sortie (D₀ ou D₁), et de leur réassignation à ce dernier.

7. Procédé selon l'une quelconque des revendications 1 à 6, caractérisé en ce qu'il comprend une étape supplémentaire, sur détection d'un état de défaillance, consistant en la transmission d'un signal d'information vers ladite unité centrale (CPU) indiquant ledit basculement de ressources de stockage de données et le passage d'un mode de fonctionnement dit normal à un mode de fonctionnement dit dégradé.

8. Procédé selon la revendication 7, caractérisé en ce qu'il comprend une étape initiale consistant en un test de détermination de l'état desdits contrôleurs de stockage de données (SP-A, SP-B) et des chemins associés (B₀, B₁), et, selon le résultat de ce test, à configurer le fonctionnement dudit sous-système de ressources de stockage (SP-A, SP-B, MD) dans ledit mode normal ou dans ledit mode dégradé.

9. Procédé selon l'une quelconque des revendications 1 à 8, caractérisé en ce qu'il comprend une étape initiale consistant en l'application d'une configuration redondante déterminée auxdites ressources de stockage (MD).

10. Procédé selon la revendication 9, caractérisé en ce que, lesdites ressources de stockage (MD) étant constituées d'un ensemble de disques magnétiques individuels (D₁-D₃₀), ladite configuration redondante consiste à associer à chaque disque magnétique individuel un second disque magnétique individuel, dit miroir, et à enregistrer en redondance sur celui-ci les données enregistrées sur le disque magnétique individuel qui lui est associé.

11. Procédé selon la revendication 9, caractérisé en ce que, lesdites ressources de stockage (MD) étant constituées d'un ensemble de disques magnétiques individuels (D₁-D₃₀), ladite configuration redondante consiste à subdiviser ledit ensemble en au moins un sous-ensemble (PD₁-PD₆) d'un nombre déterminé de disques magnétiques individuels, à enregistrer sur ledit nombre déterminé de disques magnétiques individuels un nombre déterminé de blocs de données (S₀-S₄), dites utiles, et à associer à ces blocs de données au moins un bloc de données redondantes (p₁), dites de parité.

12. Procédé selon l'une quelconque des revendications 9 à 11, caractérisé en ce qu'il comprend une étape initiale consistant à déterminer la nature de ladite configuration de redondance déterminée.

13. Dispositif de connexion de l'unité centrale (CPU) d'un système de traitement de données à un sous-système de stockage de données à redondance pour la mise en oeuvre du procédé selon l'une quelconque des revendications 1 à 12, caractérisé en ce qu'il comprend au moins un contrôleur d'entrée-sortie (Ctl) associé à ladite unité centrale (CPU), deux contrôleurs de stockage de données (SP-A, SP-B) fonctionnant en redondance, un premier et un second bus de transmission de données (B₀, B₁) pour chaque contrôleur d'entrée-sortie (Ctl), connectés auxdits contrôleurs de stockage de données (SP-A, SP-B), de manière à former ledit chemin normal (B₀) et ledit chemin de réserve (B₁) pour la transmission de données, et un ensemble de ressources de stockage de données (MD) sous la commande desdits contrôleurs de stockage (SP-A, SP-B), en ce qu'une première partition (PD₁-PD₃) de ces ressources de stockage est assignée, dans un mode de fonctionnement dit normal, à un premier contrôleur de stockage de données (SP-A), et une seconde partition à l'autre contrôleur de stockage de données (SP-B), et en ce que chaque contrôleur d'entrée-sortie (Ctl) comprend des moyens (P_{S}) de surveillance et de détection d'un état de défaillance des contrôleurs de stockage de données (SP-A, SP-B) et des chemins de transmission de données (B₀, B₁), et de basculement et de ré-assignation desdites ressources de stockage de données d'un contrôleur de stockage de données à l'autre en cas de détection d'un état de défaillance.

14. Dispositif selon la revendication 13, caractérisé en ce que lesdits moyens de surveillance et de détection d'un état de défaillance comprennent un module de programme (P_{S}), enregistré dans ledit contrôleur d'entrée-sortie.

15. Dispositif selon l'une des revendications 13 ou 14, caractérisé en ce qu'il comprend deux contrôleurs d'entrée-sortie (Ctl_{A}-Ctl_{B}), fonctionnant en redondance, associés à ladite unité centrale (CPU), chacun comportant un premier (Po_{A0}, Po_{B0}) et un second port (Po_{A1}, Po_{B1}) d'entrée-sortie, le premier port d'entrée-sortie (Po_{A0}) du premier desdits contrôleurs d'entrée-sortie (Ctl_{A}) étant connecté par un premier bus de transmission de données audit premier contrôleur de stockage de données (SP-A) et le second port d'entrée-sortie (Po_{A1}) de ce contrôleur (Ctl_{A}) étant connecté par un second bus de transmission de données audit second contrôleur de stockage de données (SP-B), pour former ledit chemin normal vers lesdits premier (SP-A) et second (SP-B) contrôleurs de stockage de données, respectivement, et le premier port d'entrée-sortie (Po_{B1}) du second desdits contrôleurs d'entrée-sortie (Ctl_{B}) étant connecté par un premier bus de transmission de données audit premier contrôleur de stockage de données (SP-A) et le second port d'entrée-sortie (Po_{B1}) de ce contrôleur d'entrée-sortie (Ctl_{B}) étant connecté par un second bus de transmission de données audit second contrôleur de stockage de données (SP-B), pour former ledit chemin de réserve vers lesdits premier (SP-A) et second (SP-B) contrôleurs de stockage de données, respectivement.

16. Dispositif selon la revendication 15, caractérisé en ce qu'il comprend deux ensembles de contrôleurs d'entrée-sortie (Ctl₁-Ctl₂, Ctl₃-Ctl₄) associés à ladite unité centrale (CPU), fonctionnant en redondance et disposés en parallèle.

17. Dispositif selon l'une quelconque des revendications 13 à 16, caractérisé en ce que lesdites ressources de stockage (MD) sont constituées d'un ensemble de disques magnétiques individuels (D₁-D₃₀), en ce que ces disques individuels sont groupés en un ensemble formant une configuration de redondance déterminée, en ce que cet ensemble est divisé en unités logiques (LUN₀-LUN₂), et en ce que ces unités logiques sont subdivisées en des premier et second sous-ensembles, le premier sous-ensemble d'unités logiques étant assigné à un premier contrôleur de stockage (SP-A) et le second sous-ensemble d'unités logiques étant assigné au second contrôleur de stockage (SP-B).
